Europäisches Patentamt

European Patent Office

Office européen des brevets

(11) Publication number: **0 080 761**
**B1**

# EUROPEAN PATENT SPECIFICATION

(45) Date of publication of patent specification: **07.08.85**

(21) Application number: **82201470.0**

(22) Date of filing: **19.11.82**

(51) Int. Cl.⁴: **A 47 J 47/20, E 03 C 1/182**

(54) **Sink with upper peripheral delivery system for washing and rinsing products, and a perforated basket therefor.**

(30) Priority: **26.11.81 IT 3491181 u**

(43) Date of publication of application:
**08.06.83 Bulletin 83/23**

(45) Publication of the grant of the patent:
**07.08.85 Bulletin 85/32**

(84) Designated Contracting States:
**AT BE CH DE FR GB LI LU NL SE**

(56) References cited:
**FR-A-2 326 900**
**GB-A-1 241 651**
**US-A-2 902 700**
**US-A-3 728 745**
**US-A-4 041 964**

(73) Proprietor: **IDEAL-STANDARD GMBH**
**Euskirchener Strasse 80**
**D-5300 Bonn 1 (DE)**

(72) Inventor: **Gandini, Luigi**
**102, Via Ampère**
**I-20131 Milano (IT)**

(74) Representative: **Corradini, Corrado**
**STUDIO SECCHI & CORRADINI 4, Via Dante**
**Alighieri**
**I-42100 Reggio Emilia (IT)**

Courier Press, Leamington Spa, England.

## Description

This invention relates to a sink comprising an upper peripheral delivery system, and arranged to facilitate the cleaning, washing and rinsing of products in general.

More specifically, the sink according to the invention is particularly suitable for washing and cleaning products such as fruit and vegetables, these operations being usually carried out in kitchens generally before such products are served on the table or used for other culinary purposes.

In this respect, it is known that this type of operation is carried out in the bowls of kitchen sinks where said products are normally disposed in bulk and immersed in a convenient water bath, they then being stirred round once or twice, and then rinsed.

The present invention proposes and protects a sink which comprises a peripheral delivery system in the rim of the bowl, and which is arranged to facilitate said cleaning, washing and rinsing of loose products, all attained by means of a constructionally simple and rational design.

The invention comprises a sink according to claim 1. The nozzle means comprise a plurality of small equidistant bores inclined downwards, and orientated along angularly equidistant chords of said rim, and communicating with an interspace which externally embraces said basin.

In addition, said interspace communicates with a water feed conduit provided in the rear zone of the sink.

The invention is completed by a perforated basket of cylindrical shape, arranged for insertion into said bowl comprising the delivery system, and having a height such as not to interfere with the water jets leaving said bores.

For a better understanding of the characteristics and constructional merits of the invention, reference is made hereinafter by way of non-limiting example to the figures of the accompanying drawings, in which:

Figure 1 is a plan projection of the invention from above;

Figure 2 is a section on the line II—II of Figure 1;

Figure 3 is a section on the line III—III of Figure 2;

Figure 4 is a section on the line IV—IV of Figure 3, with the basket inserted into the bowl;

Figure 5 is a partial view to an enlarged scale of the upper inner rim of the bowl;

Figure 6 is an axial section through the perforated basket for insertion into the bowl;

Figure 7 is a section on the line VII—VII of Figure 6, to an enlarged scale.

Said figures show a sink, which comprises a draining and work top 1, a first bowl 2 with its respective discharge port 3, and a second bowl 4 with a central discharge port 5 in its base.

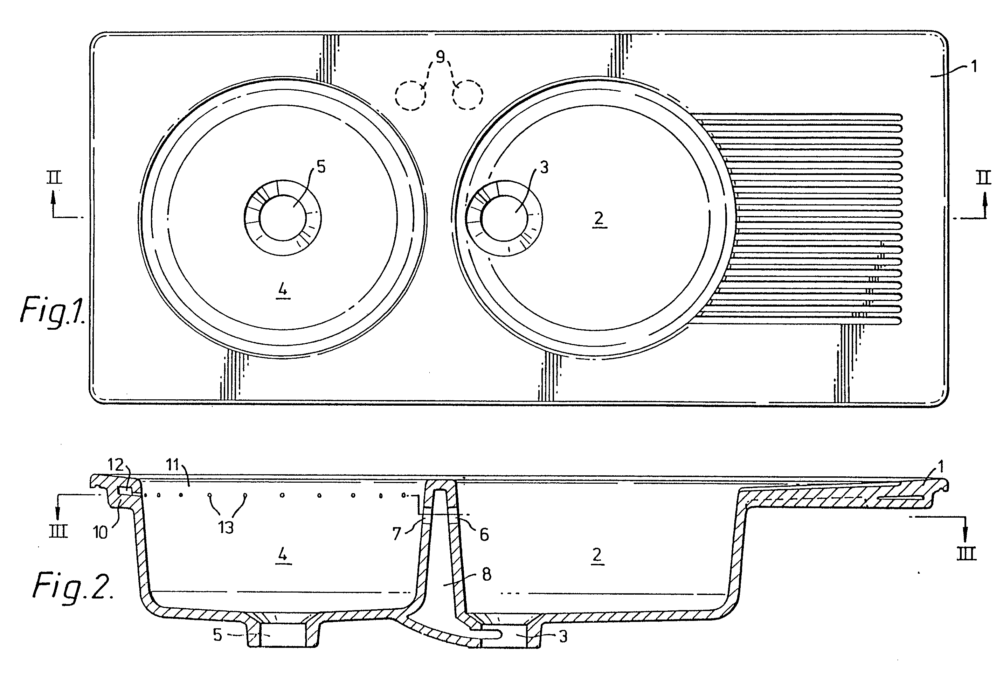

As is clearly visible in Figures 1, 2 and 3, the discharge port 3 of said first bowl 2 is provided in a lateral zone of the respective base, and more specifically in proximity to the second bowl 4.

At this point it should be noted that in the accompanying figures the invention has been shown as a sink with two bowls, but this must in no way be considered limiting in that the characteristic elements of the invention are also suitable for a sink with a single bowl.

The two bowls 2 and 4 are of slightly frusto-conical shape, and their walls are provided upperly, at the point at which they are closest together, with respective overflow apertures 6 and 7 (Figure 2).

These latter open into a collection chamber which lies between said two bowls, and communicates lowerly with the discharge port 3.

In the rear zone of the work top 1 lying between the two bowls, there are provided two normal seats 9 for mounting two likewise normal taps, for hot water and cold water respectively.

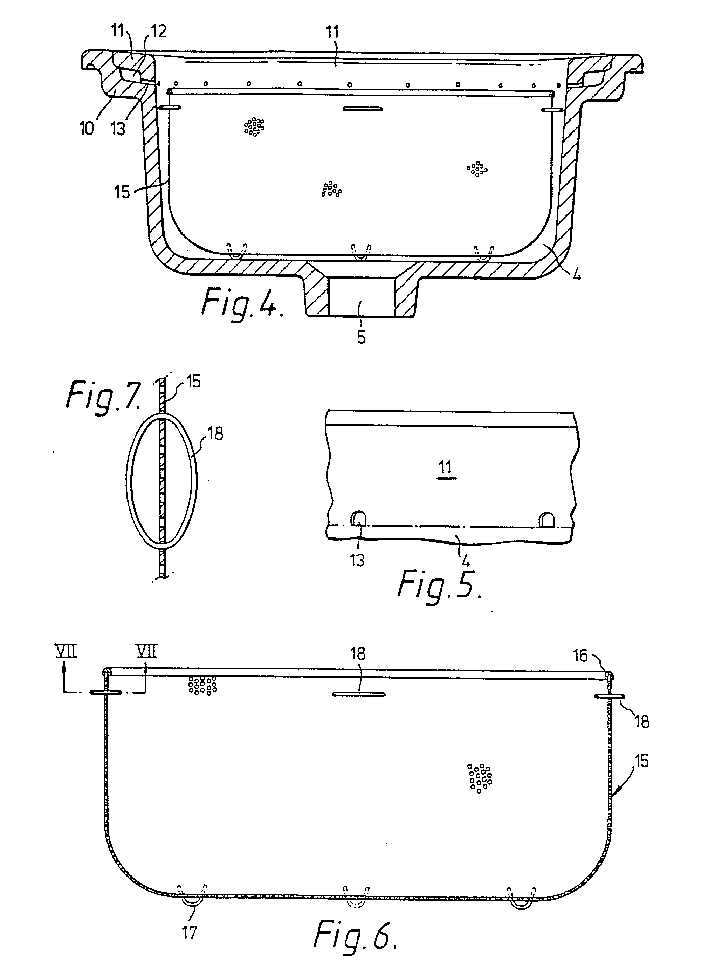

From Figures 2 and 4 it can be seen that practically the entire circumferential zone of the mouth of the bowl 4 lying external to the overflow aperture 7 is configured, when viewed in cross-section, as a double-stepped ledge 10, of which the lower wall is slightly inclined inwards and towards the base of the bowl 4.

To said double-stepped ledge 10 there adheres a curved member in the form of an open ring 11 of practically right angled cross-section, its outer surfaces defining, in combination with the corresponding inner surfaces of said ledge 10, an interspace 12 which embraces most of the mouth of the bowl 4.

From said Figures 2 and 4 it can also be seen that the surfaces of the open ring member 11 lie on the direct extension of the inner surface of the bowl 4 and upper face of the work top 1.

As the sink is produced by a casting operation starting from a ceramic material in aqueous suspension, or slip, it is apparent that the interspace 12 can also be produced directly in the material during said casting.

The lower edge of the open ring member 11, which is parallel to the lower wall of said double-stepped ledge 10, is provided with a plurality of transverse channels 13 which are analogous to each other, and as best shown in Figure 5 are of inverted U cross-section.

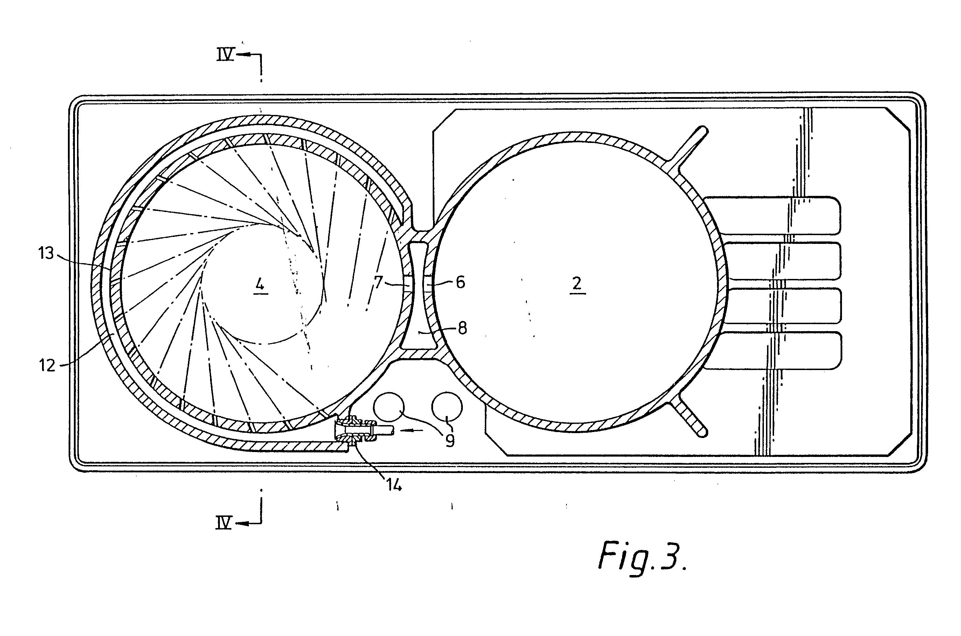

More specifically, as best shown in Figure 3, when viewed in plan, the longitudinal axes of said channels 13 are orientated in the same direction, along angularly equidistant chords, of which the envelope forms a circumference which is concentric with the rim of the bowl 4.

The last two channels located in the front zone of the sink (Figure 3), i.e. at the downstream end of the interspace 12, form an exception to the aforesaid arrangement.

The upstream end thereof is provided, below the work top 1, with a connection 14 for connecting the interspace 12 to a suitable water feed conduit.

Said conduit can be connected for example to the outlet of the sink taps by way of a suitable reversal valve, as happens for example in bath-shower units, or can be directly connected to the water main and have its own tap.

The described sink is fitted with a basket 15 designed to contain loose products of various types such as fruit and vegetables or others, and is suitable for insertion into the bowl 4.

The basket 15 is of cylindrical shape, and is constituted by a thin sheet of stainless steel, which is deep-drawn and densely perforated (Figure 6).

A metal section 16 is forcibly mounted on the upper edge of the basket, and from the bottom thereof there branch three circumferentially equidistant support feet 17, constituted by a piece of metal rod bent in V shape.

Four handles 18 are provided at the same level below the section 16, and also perform the function of centering members for the basket when this letter is inserted into the bowl 4 as shown in Figure 4.

The handles 18 are circumferentially equidistant, and are each constituted by a piece of metal rod which is shaped in the form of an ellipse such that half of it is inside and half of it outside the basket, with reference to the major axis of said ellipse, as shown in Figure 7.

The same figure also shows that in mounting said handles, the perforations in the metal sheet which forms the basket shell are advantageously used.

It is also apparent that said handles can be circular.

Finally, it should be noted (Figure 4) that the height of the basket is such that it does not interfere with the water jets leaving the passages 13.

When it is intended to wash, clean or rinse a product such as vegetables, these are placed in the basket 15 which is inserted in its turn into the bowl 4 comprising the delivery system, and with its discharge port 5 closed.

The wash water is fed into the interspace 12 through the connector 14, emerges from it through the passages 13 and flows into the basket.

At a certain point, the surface of the water bath present in the bowl 4 comprising the delivery system is struck by the crossing water jets, which impress a vortex and turbulent movement to the water and to the product in the basket.

By virtue of this vortex and turbulent movement, mutual rubbing between the various parts of the product and between this latter and the basket is greatly facilitated, so that a smooth, rapid and correct washing and cleaning action is exerted on said product.

## Claims

1. A sink with an upper peripheral delivery system, for washing and rinsing loose products, and of the type comprising a work top (1) with at least one wash basin or bowl (4), characterised by comprising, immediately below the mouth of the bowl (4) and in the wall thereof, nozzle elements (13) orientated downwards and partly tantentially, and communicating with a service interspace (12) which externally embraces the mouth of the bowl (4) below the work top (1).

2. A sink as claimed in claim 1, characterised in that said nozzle elements comprise a plurality of circumferentially equidistant equal passages (13) which are disposed at the same level and slightly inclined towards the base of the bowl (4) comprising the delivery system, and which, when viewed in plan projection, are orientated in the same direction along angularly equidistant chords, of which the envelope forms a circumference concentric with the rim of the bowl (4).

3. A sink as claimed in claim 1, characterised in that said service interspace (12) is in the form of an open ring, of which the upstream or water inlet end is located in proximity to the rear zone of the sink, this latter being equipped for its connection to hot water and cold water conduits.

4. A sink as claimed in claim 1, characterised by comprising, in combination therewith, a perforated basket (15) for containing a product to be cleaned, and arranged for insertion into the bowl (4) comprising the peripheral delivery system, and extending vertically to a level which is below the level occupied by the water jets leaving said nozzle elements (13).

5. A sink as claimed in claim 4, characterised in that said basket comprises an upperly open cylindrical shell (15) constituted by a thin stainless metal sheet which is deep-drawn and densely perforated, along the mouth of which there extends a metal section (16) and from the base of which there branches a set of circumferentially equidistant support legs (17); below said metal section (16) there being provided, at the same level and circumferentially equidistant, annular members in the form of handles (18) which also act as members for centering the basket (15) relative to the bowl (4) comprising the delivery system.

6. A sink as claimed in claim 4, characterised in that said handles (18) which act as centering means are each constituted by a piece of metal rod shaped as a closed ring and coupled to the basket (15) through its drawing perforations.

## Revendications

1. Un évier comportant un système périphérique supérieur de distribution, pour le lavage et le rinçage de produits en vrac, et du type comportant un dessus de travail (1) et au moins un bac ou cuve de lavage (4), caractérisé par le fait qu'il comporte, immédiatement sous l'ouverture du bac (4) et dans la paroi de celui-ci, des éléments de buse (13) orienté vers le bas et suivant une direction partiellement tangente, et communiquant avec un espace intermédiaire de service (12) qui entoure extérieurement l'ouverture du bac (4) sous le dessus de travail (1).

2. Un évier selon la revendication 1, caractérisé en ce que lesdits éléments à buse comportent une pluralité de passages identiques (13) équidistants dans le sens circonférenciel qui sont prévus au

5 **0 080 761** 6

même niveau, qui sont légèrement inclinés vers le fond du bac (4) comportant le système de distribution et qui, en vue en projection en plan, sont orientés dans la même direction le long de cordes angulairement équidistantes dont l'enveloppe définit une circonférence qui est concentrique à bordure du bac (4).

3. Un évier selon la revendication 1, caractérisé en ce que ledit espace intermédiaire (12) de service se présente sous la forme d'une bague ouverte dont l'extrémité amont ou d'entrée d'eau est située à proximité de la zone arrière de l'évier, ce dernier étant équipé pour sa liaison avec des conduites d'eau chaude et d'eau froide.

4. Un évier selon la revendication 1, caractérisé par le fait qu'il comporte, en combinaison, un panier perforé (15) pour contenir un produit à nettoyer et agencé pour être placé dans le bac (4) comportant le système périphérique de distribution, le panier s'étendant verticalement à un niveau qui est situé au-dessous du niveau occupé par les jets d'eau quittant lesdits éléments à buse (13).

5. Un évier selon la revendication 4, caractérisé en ce que ledit panier comporte une paroi cylindrique (15) ouverte vers le haut et constituée par une feuille métallique mince en acier inoxydable qui est emboutie et perforée de manière dense, une pièce métallique (16) s'étendant le long de l'ouverture du panier, un ensemble de pieds de support (17) équidistants dans le sens circonférenciel faisant saillie à partir du fond du panier, des éléments annulaires sous forme de poignées (18), situés au même niveau et équidistants dans le sens circonférenciel, étant prévus sous ladite pièce métallique (16), ces éléments agissant également comme organes de centrage du panier (15) par rapport au bac (4) comportant le système de distribution.

6. Un évier selon la revendication 4, caractérisé en ce que lesdites poignées (18) qui agissent comme moyens de centrage sont constituées chacune par une pièce de tige métallique sous la forme d'une bague fermée et couplée au panier (15) à travers ses perforations de drainage.

**Patentansprüche**

1. Spüle mit einem Zuleitungssystem in der Oberperipherie zum Waschen und Spülen von losen Produkten, mit einer Abtropf- und Arbeitsfläche (1) mit mindestens einem Spülbecken (4), dadurch gekennzeichnet, daß unmittelbar unter der Aufnahmeöffnung in der Wandung des Spülbeckens (4) Düsenelemente (13) vorgesehen sind, daß die Düsenelemente (13) nach unten und teilweise tangential ausgerichtet sind und mit einem unter der Abtropf- und Arbeitsfläche (1) die Augnahmeöffnung des Spülbeckens umschließenden Versorgungszwischenraum (12) verbunden sind.

2. Spüle nach Anspruch 1, dadurch gekennzeichnet, daß die Düsenelemente von einer Mehrzahl von auf dem Umfang äquidistant angeordneten, gleichartigen Durchlaßkanälen (13) gebildet sind, die auf gleicher Höhe angeordnet und leicht zum Boden des das Zuleitungssystem enthaltenden Spülbeckens (4) hin geneigt sind und die, in Draufsicht, in gleicher Richtung entlang in gleichen Winkelabständen liegender Sehnen ausgerichtet sind, deren Hüllkurve einen zum Rand des Spülbeckens (4) konzentrischen Ring bildet.

3. Spüle nach Anspruch 1, dadurch gekennzeichnet, daß der Versorgungszwischenraum (12) als offener Ring ausgebildet ist, dessen Zulauf- oder Wassereinlaßende in der Nähe des hinteren Bereichs der Spüle angebracht ist, wobei letzteres zum anschluß an Heiß- und Kaltwasserleitungen ausgestattet ist.

4. Spüle nach Anspruch 1, dadurch gekennzeichnet, daß zusätzlich ein zum Einsatz in das das Zuleitungssystem enthaltende Spülbecken (4) geeigneter, zur Aufnahme eines zu reinigenden Produkts bestimmter, gelochter Korb (15) vorgesehen ist, der vertikal bis in eine Ebene reicht, die unter der Ebene liegt, die durch die den Düsenelementen (13) entströmenden Wasserstrahlen eingenommen wird.

5. Spüle nach Anspruch 4, dadurch gekennzeichnet, daß der Korb (15) aus einer zylindrischen Hülle aus dünnem, rostfreiem Metallblech, das tiefgezogen und dicht perforiert ist, und einer sich entlang der Aufnahmeöffnung der Hülle erstreckenden Metallfassung (16) besteht, daß vom Boden der Hülle eine Gruppe von auf dem Umfang äquidistant angeordneten Abstützfüßen (17) abragt und daß unterhalb der Metallfassung (16) in einer Ebene auf dem Umfang äquidistant ringförmige Teile in Form von Handgriffen (18) vorgesehen sind, die auch zum Zentrieren des Korbs (15) gegenüber dem das Zuleitungssystem enthaltenden Spülbecken (4) dienen.

6. Spüle nach Anspruch 5, dadurch gekennzeichent, daß die zum Zentrieren dienenden Handgriffe (18) jeweils aus einem zu einem geschlossenen Ring geformten Drahtstück bestehen und am Korb (15) jeweils durch die Ablauflöcher befestigt sind.

Fig1.

Fig.2.

Fig.3.

0 080 761

Fig.4.

Fig.7.

Fig.5.

Fig.6.